# FASCICULE DE BREVET EUROPEEN

(11) **EP 2 718 877 B1**
(45) Date de publication et mention de la délivrance du brevet: **07.12.2016**
(21) Numéro de dépôt: 12731550.5
(22) Date de dépôt: 08.06.2012
(51) Int. Cl.: G06K 19/077, H05K 1/02, G06K 7/00

(54) **MODULE A MICROCIRCUIT ET CARTE A PUCE LE COMPORTANT**
MIKROSCHALTUNGSMODUL UND CHIPKARTE EIN SOLCHES ENTHALTEND
MICROCIRCUIT MODULE AND SMART CARD COMPRISING SAME

(30) Priorité: 10.06.2011 FR 1155132
(43) Date de publication de la demande: 16.04.2014
(73) Titulaire: Oberthur Technologies, 92700 Colombes (FR)
(72) Inventeur: BOSQUET, Olivier, F-35500 Vitre (FR)
(74) Mandataire: Santarelli
(86) Numéro de dépôt international: PCT/FR2012/051292
(87) Numéro de publication internationale: WO 2012/168666

(56) Documents cités:
- EP-A1- 0 409 241
- US-A1- 2005 212 690
- US-B2- 6 634 565
- "ISO/IEC 7816-2 : Information technology - Integrated circuit(s) cards with contacts - Part 2 : Dimensions and location of the contacts", INTERNATIONAL STANDARD ISO/IEC,, vol. 7816-2, 1 mars 1999 (1999-03-01), pages 1-5, XP007918489,

## Description

L'invention concerne un module de carte à puce et une carte à puce à contacts externes comportant un tel module.

Ainsi qu'on le sait un module de carte à puce comporte un film porteur en couche mince dont une face, dite face extérieure (car elle est destinée à être accessible de l'extérieur de la carte à puce qui sera équipée de ce module), comporte des zones de contact selon une configuration bien définie et l'autre face, dite face intérieure (car elle est destinée à être orientée vers l'intérieur d'une cavité ménagée dans la carte pour recevoir le module) porte un microcircuit dont des plots de contact sont connectés électriquement à au moins une partie des zones de contact de la face extérieure.

La configuration des zones de contact de la face extérieure est habituellement conforme à la norme ISO 7816, qui prévoit la présence de huit zones de contact réparties en deux séries parallèles de quatre zones de contact ayant des fonctions bien définies ; ces zones de contact sont habituellement désignées par les références C1 à C8 :
- la zone de contact C1 étant destinée à recevoir une tension d'alimentation notée Vcc (ou Vdd),
- la zone de contact C2 étant destinée à recevoir un signal d'initialisation noté RST,
- la zone de contact C3 étant destinée à recevoir un signal d'horloge noté CLK,
- la zone de contact C4 étant destinée à recevoir un signal dépendant de l'application visée (la norme fait état d'une application future),
- la zone de contact C5 étant destinée à recevoir une tension de masse notée GND (ou Vss),
- la zone de contact C6 étant destinée à recevoir une tension de programmation de carte à mémoire notée VPP,
- la zone de contact C7 étant destinée à recevoir un signal d'entrée/sortie d'échange de données, et
- la zone de contact C8 étant destinée à coopérer avec la zone C4 en fonction de l'application visée.

Les zones de contact C4 et C8 n'ont pas toujours été utilisées dans le passé, mais le sont de plus en plus, notamment pour des communications USB, ou pour des communications SPI.

En fait une version récente de la norme ISO 7816 (version 7816-2&10&12) précise que la plage C4 peut avoir une fonction de reset, d'écriture ou de lecture, ou de borne D+ pour une fonction USB, tandis que la plage C8 peut avoir une fonction de borne D- pour une fonction USB.

La norme ISO 7816 fixe en outre les positions réciproques des diverses zones de contact, ainsi que les dimensions minimales de ces zones de contact, à savoir 2 mm de large et 1,7 mm de haut (par convention, les plages sont disposées en séries verticales, près des petits côtés du film porteur (qui a une forme globalement rectangulaire avec des coins arrondis).

Les cartes à puce comportent un corps dans lequel une cavité est ménagée pour recevoir un tel module. La norme ISO 7816 précise également la configuration d'un tel module au sein d'un tel corps de carte.

Ce corps de carte peut avoir plusieurs formats, également normalisés. C'est ainsi que sont utilisés trois importants formats standardisés connus sous les désignations suivantes (voir notamment la norme ETSI TS 102 221 et la norme ISO 7816) :
- ID-1 ayant une longueur de 85.6 mm, une largeur de 54 mm, et une épaisseur de 0.76 mm ; ce format est parfois désigné par 1 FF (pour « premier facteur de forme »),
- ID-000 (aussi appelée Plug-in UICC, ou carte SIM GSM) ayant une longueur de 25 mm, une largeur de 15 mm, et la même épaisseur de 0.76 mm ; ce format est parfois désigné par 2FF (pour « deuxième facteur de forme »),

- Mini-UICC (parfois aussi appelée nouvelle carte SIM), avec une longueur de 15 mm, une largeur de 12 mm et la même épaisseur de 0.76 mm ; ce format est parfois désigné par 3FF (pour « troisième facteur de forme »).

Il faut préciser que les notions de longueur et de largeur sont définies par référence à l'orientation du microcircuit.

La tendance est à la miniaturisation des cartes à puce, et on commence à parler d'un quatrième format, encore plus petit, qui devrait s'appeler 4FF.

On comprend toutefois que cette démarche de miniaturisation est limitée par le fait que l'on souhaite aussi continuer aussi longtemps que possible à respecter les normes précitées, et que le fait de vouloir conférer aux cartes à puce un nombre sans cesse croissant de fonctions empêche de miniaturiser sensiblement les composants devant être fixés à la face arrière des modules.

Ce souci de multiplier les fonctions implantées dans une carte à puce conduit par ailleurs à vouloir augmenter le nombre de plages de contact au-delà des huit zones de contact définies par la norme ISO 7816.

On connaît ainsi, d'après le document EP - 0 409 241 (Toshiba), le principe de disposer des séries de zones additionnelles de contact, en duplication des séries de zones habituelles, ou en alternance avec celles-ci.

On connaît aussi, d'après le document WO - 2000/043951 (Bull et al), une configuration à deux séries de zones de contact destinées à être connectées à un circuit sous-jacent, avec deux zones de contact disposées entre ces deux séries de zones de contact et destinées à être connectées à une antenne disposée dans le corps de carte.

On connaît en outre, d'après le document US - 6 634 565 (Gray), le principe de disposer, entre deux séries de zones de contact conformes à la norme ISO 7816, une série centrale de zones de contact destinée à permettre des connections d'entrées/sorties additionnelles, ou des fonctions additionnelles. Un dessin approprié du circuit imprimé disposé sur la face arrière du film du module permet, en combinaison avec un montage en flip-chip du composant électronique, d'utiliser l'espace disposé entre les séries de zones de contact habituelles pour y disposer des zones de contact additionnelles.

On connaît en outre, d'après le document EP - 1 816 593 (Axalto), un connecteur de carte à puce comportant deux séries parallèles de plages de contact et au moins une plage de contact additionnelle placée entre les deux séries et s'étendant dans le prolongement d'une plage de l'une des séries précitées, en direction d'une ligne médiane située à égale distance de ces séries, sans dépasser cette ligne médiane, ce qui permet une bonne compatibilité avec des lecteurs de cartes classiques.

On connaît en outre, d'après le document US - 2010/038438 (Kim et al), une configuration de plages de contact de géométrie complexe permettant une connexion aisée avec une grande variété de composants électroniques (il y a non seulement des plages de contact conformes à la norme ISO 7816, mais aussi des plages additionnelles destinées à une connexion à une antenne, disposées à l'extérieur de l'ensemble des deux séries de plages de contact).

Selon une approche plus mécanique (sans viser particulièrement l'obtention de zones de contact additionnelles), on connaît d'après le document US - 6 054 774 (Ohmori et al) le principe de disposer entre des séries de zones de contact, une ou deux zone(s), isolée(s) ou reliée(s) à l'une des zones précitées, telles que toute ligne traversant l'ensemble de zones traverse nécessairement l'une d'entre elles, ce qui contribue à la rigidité de l'ensemble (la configuration des zones de contact ne semble pas tendre à suivre une norme particulière).

Il est à noter qu'aucun des documents cités ne se préoccupe de diminuer les dimensions du module tout en cherchant à respecter autant que possible les contraintes de configuration fixées par les normes en vigueur.

L'invention vise un module de carte à puce permettant une diminution en deçà du format 3FF, tout en respectant autant que possible les contraintes fixées par les normes telles que la norme ISO 7816, et en favorisant, à titre subsidiaire, une bonne tenue mécanique.

L'invention propose à cet effet un module à microcircuit pour carte à puce comportant un film porteur muni sur une première face de huit plages de contact adaptées à être mises en contact avec un élément externe et, sur une seconde face, d'un composant électronique muni de bornes de connexion auxquelles les plages de contact sont connectées au travers du film porteur, ces huit plages de contact étant disposées en deux séries parallèles de trois plages de contact entre lesquelles sont situées deux autres plages de contact, ces séries de plages de contact étant alignées chacune parallèlement à une même direction du film porteur de telle manière que les plages de contact de l'une des séries font face respectivement, transversalement à ladite direction, aux plages de contact de l'autre des séries, les deux autres plages de contact étant respectivement situées à proximité des plages de contact formant les extrémités de chacune des séries, les plages de contact ayant chacune, parallèlement à ladite direction, une dimension d'au moins 1,7 mm et, transversalement à cette direction, une dimension d'au moins 2 mm, les plages de contact des deux séries parallèles respectant les dispositions de la norme ISO 7816 en ce qui concerne les plages notées C1 à C3 et C5 à C7 dans cette norme, ces huit plages de contact longeant conjointement chacun des côtés du film porteur.

Il est à noter que ce qui est ici appelé film porteur est aussi appelé, selon les cas, substrat isolant, ou vignette, ou plaquette flexible, etc.

Le fait de dire que les huit plages de contact longent conjointement chacun des côtés du film porteur signifie que chaque plage se situe à une distance d'un tel bord qui est du même ordre que l'espacement entre ces plages ; en d'autres termes, les huit plages de contact ont une configuration telle que leurs bords extérieurs forment un rectangle situé à proximité immédiate de chacun des bords du film porteur ; ainsi l'encombrement des plages de contact sur le film porteur représente la quasi-totalité (au moins 80%, voire 90%) de la surface du film porteur.

Ainsi, l'invention enseigne de renoncer à la disposition classique, imposée par la norme ISO 7816, de séries de quatre zones de contact, tout en conservant de nombreuses dispositions géométriques de cette norme. Certes la norme associait les plages de contact notées C4 et C8 (selon cette norme) à une application « future », au point que certains ont cru pouvoir considérer que ces plages étaient optionnelles. Ainsi le document EP - 1 816 593 l'envisage, de manière très évasive, sans donner la moindre justification du principe de supprimer des plages dites optionnelles tout en ajoutant des plages additionnelles ; on peut noter à ce propos que, dans les exemples de nombre de plages additionnelles recommandés, ce document mentionne 1, 3 ou 4, mais pas le nombre 2. Toutefois, une telle configuration à deux séries de trois plages de contact seulement n'est pas connue en combinaison avec d'autres plages ayant le rôle des plages C4 et C8. En fait on peut considérer que l'invention enseigne de déplacer d'une manière particulière les plages C4 et C8, entre les séries de trois plages, C1-C3 d'une part, et C5-C7 d'autre part.

On comprend qu'une telle disposition permet de donner au module une forme plus compacte que les actuels modules à huit plages de contact, sans impliquer de diminuer la surface individuelle de ces plages de contact ; il en découle que l'invention permet une réduction des dimensions du module, tout en respectant une grande part de la norme ISO 7816, ce qui permet d'envisager une réduction de la taille des cartes à puce munies de tels modules, tout en conservant un grand nombre des pratiques actuelles de fabrication.

Par ailleurs, quitte à s'écarter des nombreuses dispositions de la norme ISO 7816, l'homme de métier aurait plus volontiers pensé à réduire les surfaces des plages de contact, par un processus d'homothétie, plutôt que de les déplacer.

Pourtant, le fait selon l'invention de ne pas réduire la taille des plages de contact a pour avantage de ne pas augmenter les contraintes de précision dans les opérations de montage du composant par rapport aux actuels processus de fabrication, même dans le cas d'une réduction de la taille du module.

Il peut être ajouté que, en combinaison avec la tendance actuelle à miniaturiser les cartes à puce, le besoin est ressenti d'assurer autant que possible une compatibilité avec les formats actuels, 3FF voire plus grands ; il est intéressant à cet égard de noter que la configuration enseignée par l'invention est conforme à la norme ETSI 102 221 v8.20 gérant le format des cartes GSM.

De manière préférée, le composant est monté en flip-chip, le film porteur comportant, sur ladite autre face, des pistes électriquement conductrices respectivement connectées aux huit plages de contact au travers du film porteur et comportant des plages de connexion faisant face aux bornes de connexion du composant auxquelles elles sont fixées.

Il importe de noter que le montage flip-chip des composants au sein des modules est bien moins fréquent que le montage à connexion filaire appelé wire-bonding, car ce dernier a le gros avantage de permettre qu'un film porteur soit préparé avec ses plages de contact indépendamment de la géométrie du composant électronique qui doit lui être ultérieurement fixé, ce qui permet de très grandes cadences, un simple changement de paramétrage dans les connexions filaires permettant de changer de type de composants. Au contraire, le montage flip-chip implique la spécialisation du film porteur à un stade précoce de la production du module, puisque les pistes doivent tenir compte de la géométrie des bornes de connexion du futur composant électronique. En outre, puisqu'ainsi le montage des composants se fait dans une très grande majorité des cas en connexion filaire, la configuration des bornes de connexion de ces composants est choisie par leurs fabricants en sorte de faciliter ce type de montage ; mais cette configuration rend complexe le dessin des pistes à prévoir sur la face arrière du film porteur pour un montage flip-chip (le composant est alors monté à l'envers par rapport au montage à connexion filaire) ; on comprend ainsi que l'homme de métier avait a priori tendance à conserver la disposition des huit plages de contact des modules en deux séries parallèles de quatre plages, si cela lui permettait de conserver un montage à connexion filaire.

En fait, puisque la disposition des plages de contact est telle que chacune d'entre elles est à proximité d'un bord du film porteur, il aurait été possible de conserver un montage par connexion filaire, puisqu'ainsi chacune des plages de contact se trouve faire face, au travers du film porteur, à une zone arrière qui n'est pas couverte par le composant et qui est donc disponible pour un montage à connexion filaire ; mais le montage flip-chip permet une meilleure compacité, en épaisseur, pour le module.

On peut envisager que le composant soit uniquement fixé au film porteur par l'intermédiaire des bornes de connexion de ce composant et des plages de connexion situées en regard sur la face arrière du film ; toutefois il est préférable de compléter cette liaison mécanique assurée par la connexion électrique par un matériau intercalaire remplissant l'espace entre ce film porteur et la face en regard du composant (ce matériau est classiquement appelé underfiller) ; de manière connue en soi, celui-ci peut être, selon les besoins, électriquement isolant, ou électriquement conducteur (de manière anisotrope, uniquement parallèlement aux liaisons électriques). On comprend que la présente d'un tel matériau intercalaire contribue à assurer une bonne rigidité du module à l'emplacement du composant.

De manière préférée, le film porteur comporte, sur sa première face, une zone de renfort faisant face, au travers de ce film, à la totalité du composant. Cela a un avantage important du point de vue mécanique, puisqu'ainsi les efforts susceptibles d'être appliqués à la future carte à puce ne risquent guère de dégrader par flexion le composant ou sa fixation au sein du module. Il faut comprendre que, dans une démarche de miniaturisation des modules et des cartes à puce, le module tend à occuper une fraction de plus importante de la surface de la carte à puce ; puisque, dans la pratique, les cartes sont fabriquées au sein de corps plus grands vis-à-vis desquels ces cartes sont ensuite séparées par fracture de liaisons cassables, cette miniaturisation a pour conséquence que le module est de plus en plus sollicité lors de l'application de ces efforts de séparation.

De manière avantageuse, les plages de contact disposées sur la première face du film porteur sont formées au sein d'une couche métallique, la zone de renfort ayant la même épaisseur et la même composition que les plages de contact. Ainsi, puisque les plages de contact sont classiquement délimitées par gravure sur toute son épaisseur d'une couche métallique, la formation de cette zone de renfort peut être faite de la même manière, préférentiellement en même temps. Il est à noter que cette opération de délimitation des plages de connexion peut s'accompagner par une étape de formation d'un supplément de matière de manière à augmenter l'épaisseur de la zone de renfort par rapport à celle des plages de connexion.

Selon une forme de réalisation de l'invention, la zone de renfort est d'un seul tenant avec l'une desdites autres plages de contact, c'est-à-dire que la zone de renfort et cette plage peuvent se prolonger l'une dans l'autre sans discontinuité ; en variante, elle peut être d'un seul tenant avec l'une des plages de contact de l'une des séries, par exemple une plage formant terre (la connexion mécanique/électrique entre la zone de renfort et une telle plage peut se faire par une zone à angle droit ou arrondie). Toutefois, de manière préférée, la zone de renfort est électriquement isolée vis-à-vis de chacune des plages de contact. En fait, une telle isolation électrique s'accompagne du fait que cette zone de renfort est séparée des plages de contact par des bandes étroites du film porteur non recouvertes (par le matériau constitutif des plages de connexion ou de la zone de renfort), ce qui revient à dire que la zone de renfort est alors mécaniquement indépendante des plages de connexion, ces bandes étroites formant des zones de flexion facile, contribuant à minimiser les efforts de flexion que la zone de renfort, et donc le composant de l'autre côté du film porteur, peut avoir à subir. De manière avantageuse, la zone de renfort a, parallèlement à ladite direction du film porteur, une dimension supérieure (de quelques pourcent par exemple) à celle des plages de contact situées au milieu des séries de plages de contact, ce qui contribue, à l'inverse à donner une certaine rigidité au module dans son ensemble, tout en permettant les avantages de tenue mécanique précités.

De manière avantageuse, lesdites deux autres plages de contact sont dédiées à une fonction de communication USB, ce qui constitue une fonction d'intérêt croissant en pratique.

Il est à noter que la configuration des plages de contact en séries de trois-deux-trois plages n'est aucunement incompatible avec le fait que bornes de connexion du composant auxquelles sont connectées les huit plages de contact sont réparties en deux séries parallèles de quatre bornes de connexion. Cela revient à dire que la mise en oeuvre de l'invention n'implique pas de changement des configurations des composants actuels, malgré le changement de configuration des huit plages de contact. En fait la configuration des plages de contact selon l'invention n'impose rien quant aux emplacements des bornes de connexion.

L'invention propose également une carte à puce comportant un module du type précité, comportant un corps de carte dans laquelle est ménagée une cavité comportant une partie profonde adaptée à recevoir le composant électronique, qui est entourée d'une partie périphérique de moindre profondeur à laquelle le module est fixé par sa périphérie.

De manière préférée, l'ensemble des huit plages de contact est en regard de cette partie périphérique (il en découle que la portion profonde de la cavité est à peine plus grande, parallèlement au film porteur du module, que le composant). Cela permet une bonne rigidification de la carte à puce, même lorsque le corps de carte est à peine plus grand (parallèlement au film porteur) que le module ; en outre, cela contribue à la tenue mécanique de la carte en cas d'efforts appliqués, notamment lors de sa séparation vis-à-vis d'un support plus grand, puisque cela a pour effet de localiser les conséquences de tels efforts entre les plages de contact et le composant, sous la forme d'une flexion du film porteur ; cela est particulièrement sensible lorsqu'il y a une zone de renfort et que celle-ci est mécaniquement indépendante des plages de connexion. Cet avantage existe même lorsque le composant est monté en flip-chip, auquel cas les pistes sont en partie prises en sandwich entre cette partie périphérique peu profonde et la périphérie du film porteur (ces pistes sont suffisamment flexibles pour pouvoir supporter une flexion au niveau des bandes étroites situées entre les plages de contact et le composant).

Les caractéristiques précitées sont particulièrement intéressantes pour la réalisation d'une carte à puce dont le corps a des dimensions inférieures à celles du format 3FF, c'est-à-dire inférieures à 15 mm x 12 mm (le module peut alors occuper plus de 80% (voire 90%) de ces dimensions.

On comprend que la disposition des plages de contact d'un module ou d'une carte se retrouve, en face à face, dans la disposition des contacteurs d'un lecteur conformé pour se connecter à un tel module ou d'une telle carte. L'invention propose ainsi, en outre, un lecteur conformé pour se connecter à au moins l'une au moins desdites deux autres plages de contact d'un module (voire d'une carte) telle que définie ci-dessus.

Des objets, caractéristiques et avantages de l'invention ressortent de la description qui suit, donnée à titre d'exemple illustratif non limitatif, donnée en regard des dessins annexés sur lesquels :
- la figure 1 est une vue de dessus d'une carte à puce munie d'un premier module conforme à l'invention,
- la figure 2 est une vue de dessus d'une autre carte à puce munie d'un second module conforme à l'invention, le composant et les pistes de connexion étant vues par transparence,
- la figure 3 en est une vue partielle en coupe selon la ligne A-A de la figure 2,
- la figure 4 est une variante de la figure 3, et
- la figure 5 est une vue partielle en coupe de la carte des figures 2 et 3 en cas d'efforts de compression appliqués.

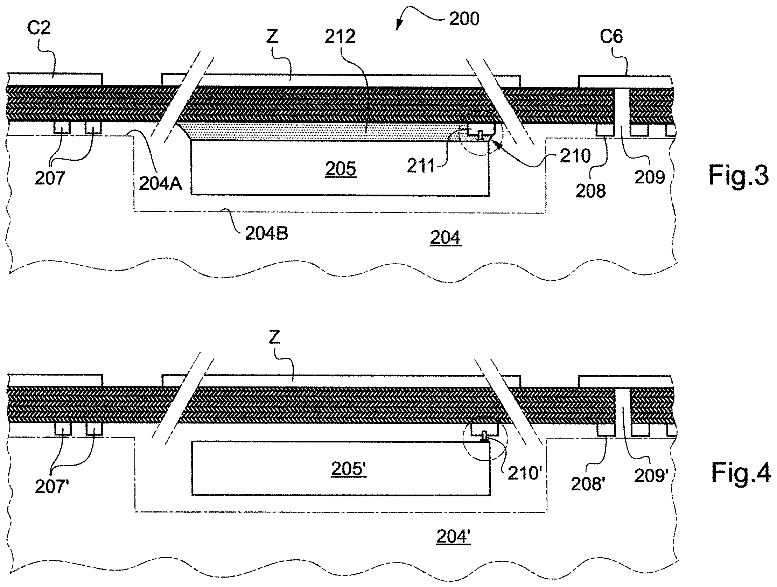

Il faut comprendre que ces dessins ne sont pas à l'échelle, pour des raisons de lisibilité ; en particulier, l'épaisseur du module est bien plus faible que leurs dimensions latérales, ce qui explique notamment de zones d'interruption de part et d'autre du module, aux figures 3 à 5.

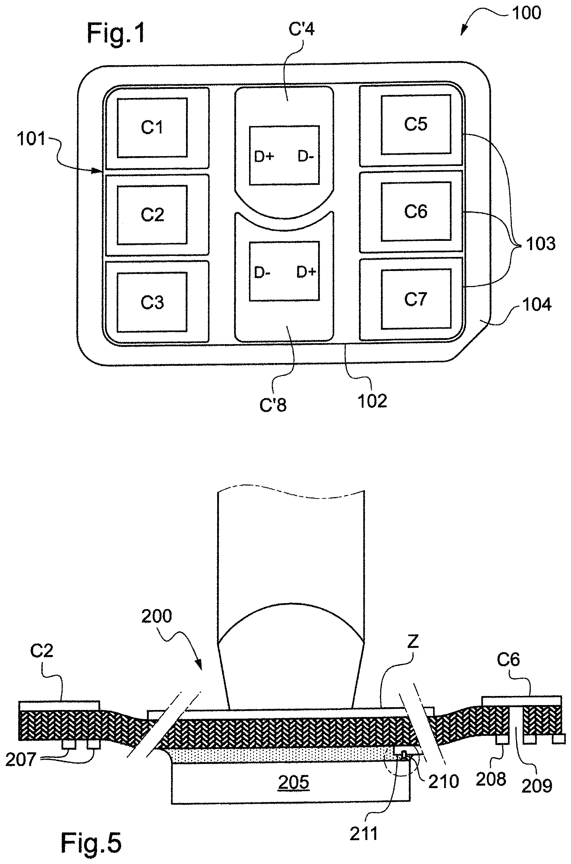

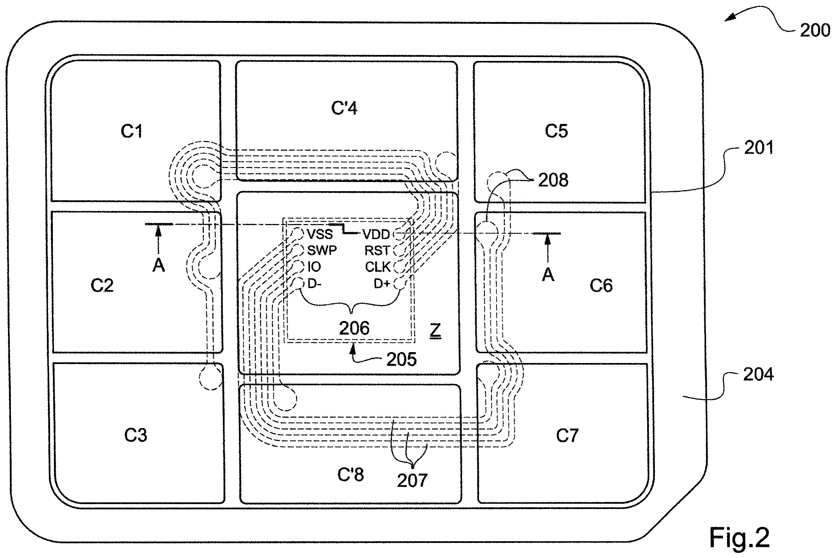

De manière générale, les figures représentent des exemples de carte à puce conformes à l'invention, qui comprennent donc des modules également conformes à l'invention. La carte représentée à la figure 1 est désignée sous la référence générale 100 tandis que la carte représentée aux figures 2, 3 et 5 est désignée sous la référence 200, la variante de la figure 4 comportant des références inspirées de celles utilisées sur les figures précédentes, mais affectées d'un indice « prime ».

Plus précisément, chacune des cartes 100 ou 200 comporte un module à microcircuit pour carte à puce comportant un film porteur globalement rectangulaire muni :
- sur une première face de huit plages de contact adaptées à être mises en contact avec un élément externe et,
- sur une seconde face, d'un composant électronique muni de bornes de connexion auxquelles les plages de contact sont connectées au travers du film porteur.

Conformément à l'invention, ces huit plages de contact sont disposées en deux séries parallèles de trois plages de contact entre lesquelles sont situées deux autres plages de contact ; ces séries de plages de contact sont alignées chacune parallèlement à une même direction du film porteur de telle manière que les plages de contact de l'une des séries font face respectivement, transversalement à ladite direction, aux plages de contact de l'autre des séries ; les deux autres plages de contact sont respectivement situées à proximité des plages de contact formant les extrémités de chacune des séries. Les plages de contact ont chacune, parallèlement à ladite direction, une dimension d'au moins 1,7 mm et, transversalement à cette direction, une dimension d'au moins 2 mm ; les plages de contact des deux séries parallèles respectent les dispositions de la norme ISO 7816 en ce qui concerne les plages notées C1 à C3 et C5 à C7 dans cette norme. Ces huit plages de contact longeant conjointement chacun des côtés du film porteur.

Ainsi, la carte 100 comporte un module noté 101 comportant un film porteur 102 muni de plages de contact 103 disposées sur une face dite externe du module, c'est-à-dire sur la face du film porteur qui est visible de l'extérieur lorsque le module est monté et fixé au sein de la carte ; ces plages de contact sont adaptées à être mises en contact avec un élément extérieur, en pratique un lecteur de carte (non représenté).

Ce module 101 est fixé à un corps de carte noté 104 dont on peut noter qu'il est à peine plus grand que le module.

Les plages de contact 103 portées sur la face externe du film porteur sont au nombre de huit, comme dans un module conforme à la norme ISO 7816, toutefois selon une disposition qui s'écarte de cette norme en ce qui concerne deux des plages (voir ci-dessous).

Sur sa face opposée (non visible de l'extérieur), le film porteur porte un composant électronique (non visible sur cette figure 1) muni de bornes de connexion auxquelles les plages de contact sont connectées au travers du film porteur (cela sera décrit à propos de l'exemple de la figure 2).

Les huit plages 103 sont réparties en deux séries parallèles de trois plages de contact et en une série intermédiaire de deux plages.

Les plages de contact desdites séries sont notées C1, C2 et C3, à gauche, et C5, C6 et C7, à droite ; ces séries de plages de contact sont alignées chacune parallèlement à une même direction du film porteur (verticale sur la figure 1), de telle manière que les plages de contact de l'une des séries font face respectivement, transversalement à ladite direction, aux plages de contact de l'autre des séries ; en d'autres termes, la plage C1 fait face, transversalement à la direction verticale, à la plage C5, la plage C2 fait face à la plage C6 et la plage C3 fait face à la plage C7.

Quant aux deux autres plages de contact, elles sont respectivement situées à proximité des plages de contact formant les extrémités de chacune des séries ; elles assurent les mêmes fonctions que pourraient assurer les plages C4 et C8 d'une combinaison habituelle de huit plages ; elles sont notées C'4 et C'8 de manière à évoquer cette similitude, l'indice « prime » indiquant qu'elles ne sont toutefois pas complètement identiques (du fait de leurs emplacements) à de telles plages C4 et C8.

Dans l'exemple ici considéré, les plages C'4 et C'8 sont dédiées à une fonction de communication USB, ce qui est conforme à la destination des plages C4 et C8 telle que définie dans la version récente de la norme ISO 7816-12. Cette destination est marquée par les mentions D+ et D- figurant sur ces plages.

Les huit plages de contact ont chacune, parallèlement à ladite direction, une dimension d'au moins 1,7 mm et, transversalement à cette direction, une dimension d'au moins 2 mm ; en outre les plages de contact des deux séries parallèles respectent les dispositions de la norme ISO 7816 en ce qui concerne les plages notées C1 à C3 et C5 à C7 dans cette norme. Il en découle que les huit plages respectent les dispositions de la norme ISO 7816 sauf en ce qui concerne l'emplacement des plages C'4 et C'8.

Ces huit plages de contact longent conjointement chacun des côtés du film porteur. En d'autres termes, l'encombrement des huit plages est à peine inférieur à l'aire de ce film porteur, l'ensemble des huit plages de contact étant tel que chacun des côtés de la vignette est longé par des bords de trois plages de contact.

On peut noter que les plages de contact C'4 et C'8 présentent ici un écartement du même ordre de grandeur (à peine de l'ordre du double) que l'écartement existant entre les plages des séries parallèles.

A titre d'indication dimensionnelle, les rectangles représentés à l'intérieur des plages de contact symbolisent les dimensions minimales prévues par la norme ISO 7816.

On comprend que l'on peut faire varier (en sens inverse) les superficies des plages de contact C'4 et C'8 sans sortir du cadre de l'invention ; en particulier (cela sera commenté ultérieurement à propos des figures suivantes), l'une des plages peut se prolonger jusqu'à une dimension correspondant globalement à l'encombrement (suivant la direction verticale de la vignette) d'un groupe de deux plages latérales de contact ; par exemple on peut prolonger la plage C'8 jusqu'à avoir un encombrement vertical similaire à celui des paires C2-C3 ou C6-C7.

La figure 2 représente un autre exemple de réalisation de carte à puce conforme à l'invention, et donc un autre exemple de réalisation de module conforme à l'invention.

Les éléments de cette figure qui sont analogues à des éléments de la figure 1 sont (à l'exclusion des noms donnés aux plages de contact, fixés ou déduits de la norme ISO 7816) affectés de signes de référence qui se déduisent des signes de référence de la figure 1 par addition du nombre 100

Ainsi la carte 200 comporte un module noté 201 comportant un film porteur 202 muni de plages de contact 203 disposées sur une face dite externe du module, et ce module est fixé à un corps de carte noté 204 dont on peut noter qu'il est à peine plus grand que le module.

Comme précédemment, les plages de contact 103 portées sur la face externe du film porteur sont au nombre de huit, réparties en deux séries parallèles C1-C2-C3 et C5-C6-C7, de part et d'autre de plages C'4 et C'8, comme dans l'exemple de la figure 1, en respectant les mêmes dispositions de la norme ISO 7816 que les plages de la figure 1.

Comme précédemment, les plages C'4 et C'8 sont avantageusement dédiées à une fonction de communication USB.

Comme précédemment, ces huit plages de contact longent conjointement chacun des côtés du film porteur. En d'autres termes, l'encombrement des huit plages est à peine inférieur à l'aire de ce film porteur, l'ensemble des huit plages de contact étant tel que chacun des côtés de la vignette est longé par des bords de trois plages de contact.

Sur sa face opposée (non visible de l'extérieur), le film porteur porte un composant électronique 205 muni de bornes de connexion auxquelles les plages de contact sont connectées au travers du film porteur.

A la différence de la figure 1, la figure 2 montre une zone Z située entre les plages de contact C'4 et C'8.

Cette figure 2 représente, par transparence au travers du film porteur, le composant 205, ainsi que ses bornes de connexion 206 ; elle montre également des pistes de connexion 207 ayant des zones d'extrémité (ici élargies et arrondies) qui sont notées 208.

Dans cet exemple, le composant électronique est en effet monté en flip-chip, c'est-à-dire que ses bornes de connexion 206 sont situées sur la face du composant qui fait face au film porteur ; ces bornes sont chacune reliées par une piste 207 à une zone d'extrémité 208 située sous une plage de contact. De manière connue en soi à propos d'un montage en flip-chip, ces zones d'extrémité sont reliées (voir la figure 3) par des vias 209 à la plage de contact située en regard sur la face avant du film porteur. Ainsi qu'on le sait ces vias sont des trous traversant le film porteur dont la paroi est métallisée pour assurer une connexion électrique entre ces zones d'extrémité et ces plages de contact ; ces trous sont borgnes en ce sens qu'ils traversent le film porteur, mais pas les plages de contact.

On peut vérifier que, conformément en partie à la norme :
- la borne appelée Vdd est connectée à la plage C1,
- la borne RST est connectée à la plage C2,
- la borne CLK est connectée à la plage C3,
- la borne Vss est connectée à la plage C5,
- la borne SWP est connectée à la plage C6, et
- la borne I/O est connectée à la plage C7.

Par analogie à la norme ISO 7816 :
- la borne D+ est connectée à la plage C'4, et
- la borne D- est connectée à la plage C'8.

On peut noter que, bien que les plages de contact soient disposées en trois séries de trois-deux-trois plages de contact, le composant peut avoir la configuration classique de deux séries de quatre bornes de connexion le long de deux côtés opposés de ce composant (en fait la configuration des bornes sur le composant n'est pas critique).

Il faut noter qu'un montage en connexion filaire entre les bornes de connexion du composant et les plages de contact est une alternative de montage du composant.

De manière avantageuse, la zone Z a un emplacement et une superficie tels qu'elle fait face, au travers du film porteur, à la totalité du composant.

Cette zone Z a, dans l'exemple ici représenté, une épaisseur (voir la figure 3) égale à celle des plages de contact ; en effet, une manière pratique de réaliser cette zone Z et les plages de contact consiste à former une couche électriquement conductrice sur la face du film porteur et de graver cette couche en sorte d'y délimiter les plages de contact et la zone Z. On comprend qu'on peut aussi prévoir une épaisseur supérieure (ou inférieure) pour cette zone Z.

Ainsi que cela sera commenté à propos de la figure 5, cette zone Z a un rôle de renfort vis-à-vis du composant.

Dans l'exemple représenté à la figure 3, les bornes du composant qui sont connectées à des extrémités des pistes (appelées plages de connexion 211) sont matérialisées par des pieds, appelés bumps 210.

De manière connue en soi, ces bumps peuvent avoir une forme effilée (à section décroissante à partir du composant), de manière à pouvoir pénétrer dans la plage 209 correspondante lors de l'application des efforts de compression servant au montage.

Cette pénétration peut suffire à assurer la connexion électrique entre le composant et les pistes 207 situées sur la face arrière du film porteur, ainsi qu'une bonne liaison mécanique entre ce composant et ce film porteur.

Toutefois, de manière avantageuse, il y a en outre, pris en sandwich entre ce film porteur et la face du composant qui lui fait face, un matériau de remplissage 212 (classiquement appelé underfiller) qui consolide la tenue mécanique. Un tel underfiller peut comporter des particules électriquement conductrices.

La figure 4 représente un module fixé au film porteur par les seuls bumps précités, donc sans underfiller. Les éléments de cette figure 4 qui sont analogues à ceux de la figure 3 sont, sur cette figure 4 désignés par des références découlant de celles de la figure 3 par addition de l'indice « prime ».

En variante non représentée (également connue en soi), la connexion électrique peut être assurée par des bumps électrolytiques, c'est-à-dire formés par électrolyse, qui ont la particularité d'avoir une section sensiblement constante ; dans un tel cas, la présence d'un underfiller est en pratique nécessaire pour assurer la tenue mécanique souhaitée.

Comme indiqué à la figure 3, le corps de carte 204 comporte une cavité recevant le module de manière à ce que les plages de contact affleurent la face supérieure de ce corps. Une telle cavité est classiquement formée d'une partie profonde et d'une partie périphérique, entourant cette partie profonde, en ayant une moindre profondeur ; en pratique la partie centrale a une profondeur suffisante pour loger le composant, tandis que la partie périphérique a une profondeur juste suffisante pour recevoir la périphérie du film porteur en y étant reliée par un adhésif (ou tout autre élément de fixation).

De manière avantageuse, cette partie périphérique notée 204A s'étend en regard de la totalité des huit plages de contact, mais pas à en regard de la zone Z (en d'autres termes, la partie profonde de la cavité est à peine plus large que le composant).

La figure 5 permet de visualiser l'intérêt de la présence de la zone de renfort Z. On comprend que lors d'un effort d'enfoncement du module vers le fond de sa cavité, la zone Z a pour avantage d'une part de répartir cet effort sur une portion significative du film porteur, ce qui minimise les risques de dégradation de celui-ci. En outre, cette zone Z a pour avantage de minimiser les efforts de flexion imposés au composant et à ses connexions électriques avec le film porteur, ce qui constitue un rôle appréciable de protection.

Si, en complément, les plages de contact sont en regard de la partie périphérique de la cavité, on comprend que, puisque la périphérie du film porteur est fixée à cette partie périphérique de la cavité, il en découle que les plages de contact sont fixées de manière sensiblement rigide à cette partie périphérique, ce qui minimise également les efforts de flexion imposés à ces plages de contact.

En fait, l'essentiel des efforts d'enfoncement que le module peut être amené à subir se traduit par des efforts de flexion au niveau des bandes étroites non recouvertes séparant les diverses plages de contact vis-à-vis de la zone de renfort Z ; puisque ces zones ne sont pas recouvertes, elles constituent les parties les plus flexibles du film porteur, adaptées à supporter sans dégradation de tels efforts de flexion.

On peut noter que cette zone de renfort Z a, parallèlement à la direction des séries de trois plages (perpendiculaire au plan de la figure 3), une dimension qui est avantageusement légèrement supérieure à la dimension analogue des plages de contact C2 et C6 entre lesquelles cette zone Z est située. Cela contribue à établir un bon compromis entre le besoin de rigidité du module et de flexibilité en cas d'enfoncement.

Un tel effort d'enfoncement est notamment appliqué au moment de séparer le corps de carte vis-à-vis d'un support plus grand au sein duquel la carte a été formée. Les efforts d'enfoncement sont susceptibles d'être appliqués par la pulpe d'un doigt, mais aussi par un outil, ce qui justifie le souci d'assurer une bonne tenue mécanique.

On peut noter que le fait que la quasi-totalité de la superficie de la face visible du module soit recouverte par les plages de contact et la zone Z a pour avantage subsidiaire de protéger le film porteur vis-à-vis d'un certain nombre d'agressions extérieures.

On comprend que la zone Z peut, en variante, être d'un seul tenant avec l'une des plages, c'est-à-dire que la zone Z peut être constituée par l'une des plages de contact, de préférence l'une des plages C'4 ou C'8, qui se prolongerait sans discontinuité vers la partie médiane de la face visible du film porteur (en d'autres termes, il n'y aurait pas de délimitation entre une portion formant plage de contact et une portion formant renfort). Le rôle de renfort mécanique et de protection du composant vis-à-vis des efforts de flexion serait alors aussi obtenu, malgré une moindre flexibilité entre la portion servant de plage de contact et celle servant de renfort. En variante, la zone Z peut être raccordée à l'une des plages de contact de l'une des séries, par exemple à la plage C5 de terre (il suffit pour ce faire de réduire la dimension horizontale, sur la figure 2, de la plage C'4). Une option intermédiaire serait de prévoir un étranglement de la couche formant cette zone, entre sa portion de renfort et sa portion formant la plage de contact.

A titre d'exemple, le film porteur est en PET, voire en FR4 ou en PI, et son épaisseur peut avoir une épaisseur d'une cinquantaine de microns (voire plus, par exemple comprise entre 50 et 100 microns), et les plages de contact ainsi que les pistes de connexion sont en cuivre, sur une épaisseur de quelques microns.

On comprend que l'invention a un intérêt tout particulier dans le cas de cartes à puce de format inférieur au format dit 3FF, c'est-à-dire inférieur à 15 mm x 12 mm.

Il est à la portée de l'homme de métier d'adapter la configuration des zones de contact d'un lecteur de carte pour pouvoir se connecter à un module, ou à une carte, conforme à l'invention, en localisant, notamment, au moins une zone de contact en regard de l'une desdites autres zones de contact C'4 ou C'8 du module ou de la carte (selon les besoins, il est possible de ne pas utiliser l'une ou l'autre des zones C'4 ou C'8, ou au contraire de les utiliser toutes les deux) ; ainsi le lecteur est conformé pour se connecter à au moins l'une au moins desdites autres plages de contact ; il y a de préférence deux zones de contact en regard de chacune desdites autres zones de contact, respectivement. Pour ce faire, il peut par exemple suffire, simplement, de déplacer la zone de contact destinée à la zone C'4 et/ou celle destinée à la zone C'8, sans changer les emplacements des zones de contact destinées à se connecter aux zones de contact C1 à C3, C5 à D7. En d'autres termes, un tel lecteur comporte une pluralité de zones de contact adaptées à se connecter à une pluralité des zones de contact du module, les dispositions relatives des zones de contact du lecteur découlant de celles des zones de contact du module, par effet miroir.

## Revendications

1. Module à microcircuit pour carte à puce comportant un film porteur (101, 201) globalement rectangulaire muni sur une première face de huit plages de contact adaptées à être mises en contact avec un élément externe et, sur une seconde face, d'un composant électronique (205) muni de bornes de connexion (210) auxquelles les plages de contact sont connectées au travers du film porteur, ces huit plages de contact étant disposées en deux séries parallèles de trois plages de contact C1, C2, C3 et C5, C6, C7 entre lesquelles sont situées deux autres plages de contact (C'4, C'8), ces séries de plages de contact étant alignées chacune parallèlement à une même direction du film porteur de telle manière que les plages de contact de l'une des séries font face respectivement, transversalement à ladite direction, aux plages de contact de l'autre des séries, les deux autres plages de contact étant respectivement situées à proximité des plages de contact formant les extrémités de chacune des séries, les plages de contact ayant chacune, parallèlement à ladite direction, une dimension d'au moins 1,7 mm et, transversalement à cette direction, une dimension d'au moins 2 mm, les plages de contact des deux séries parallèles respectant les dispositions de la norme ISO 7816 en ce qui concerne les plages notées C1 à C3 et C5 à C7 dans cette norme, **caractérisé en ce que** ces huit plages de contact longent conjointement chacun des côtés du film porteur.

2. Module selon la revendication 1, **caractérisé en ce que** le composant est monté en flip-chip, le film porteur comportant, sur ladite autre face, des pistes électriquement conductrices (207) respectivement connectées aux huit plages de contact au travers du film porteur et comportant des plages de connexion (211) faisant face aux bornes de connexion du composant auxquelles elles sont fixées.

3. Module selon la revendication 2, **caractérisé en ce que** la liaison mécanique assurée par la connexion électrique est complétée par un matériau intercalaire (212) remplissant l'espace entre ce film porteur et la face en regard du composant.

4. Module selon l'une quelconque des revendications 1 à 3, **caractérisé en ce que** le film porteur comporte, sur sa première face, une zone de renfort (Z) faisant face, au travers de ce film, à la totalité du composant.

5. Module selon la revendication 4, **caractérisé en ce que**, les plages de contact disposées sur la première face du film porteur sont formées au sein d'une couche métallique, la zone de renfort a la même épaisseur et la même composition que les plages de contact.

6. Module selon la revendication 4 ou la revendication 5, **caractérisé en ce que** la zone de renfort est d'un seul tenant avec l'une desdites autres plages de contact (C'4, C'8).

7. Module selon la revendication 4 ou la revendication 5, **caractérisé en ce que** la zone de renfort est d'un seul tenant avec l'une des plages de contact (C1, C2, C3, C5, C6, C7) de l'une des séries.

8. Module selon la revendication 4 ou la revendication 5, **caractérisé en ce que** la zone de renfort (Z) est électriquement isolée vis-à-vis de chacune des plages de contact.

9. Module selon la revendication 8, **caractérisé en ce que** la zone de renfort a, parallèlement à ladite direction du film porteur, une dimension supérieure à celle des plages de contact situées au milieu des séries de plages de contact.

10. Module selon l'une quelconque des revendications 1 à 9, **caractérisé en ce que** lesdites deux autres plages de contact (C'4, C'8) sont dédiées à une fonction de communication USB.

11. Module selon l'une quelconque des revendications 1 à 10, **caractérisé en ce que** les bornes de connexion (210) du composant auxquelles sont connectées les huit plages de contact sont réparties en deux séries parallèles de quatre bornes de connexion.

12. Carte à puce comportant un module selon l'une quelconque des revendications 1 à 11, comportant un corps de carte (104, 204) dans lequel est ménagée une cavité comportant une partie profonde (204B) adaptée à recevoir le composant électronique, qui est entourée d'une partie périphérique (204A) de moindre profondeur à laquelle le module est fixé par sa périphérie.

13. Carte selon la revendication 12, **caractérisée en ce que** l'ensemble des huit plages de contact est en regard de cette partie périphérique.

14. Carte selon la revendication 12 ou la revendication 13, dont le corps a des dimensions inférieures à celles du format 3FF.

15. Lecteur de carte conformé pour se connecter, par des plages de contact, aux plages de contact C1 à C3, C5 à C7 et à au moins l'une desdites autres plages de contact (C'4, C'8) d'un module tel que défini par l'une quelconque des revendications 1 à 11, les dispositions relatives des zones de contact du lecteur découlant de celles des zones de contact du module, par effet miroir.

## Patentansprüche

1. Mikroschaltungsmodul für eine Chipkarte, die eine global rechtwinklige Trägerfolie (101, 201) aufweist, die auf einer ersten Seite mit acht Kontaktbereichen, die geeignet sind, mit einem externen Element in Kontakt gebracht zu werden, und auf einer zweiten Seite mit einem elektronischen Bauteil (205) versehen ist, das mit Anschlussklemmen (210) versehen ist, an die die Kontaktbereiche durch die Trägerfolie hindurch angeschlossen sind, wobei diese acht Kontaktbereiche in zwei parallelen Reihen von drei Kontaktbereichen C1, C2, C3 und C5, C6, C7, zwischen denen sich zwei weitere Kontaktbereiche (C'4, C'8) befinden, angeordnet sind, wobei diese Reihen von Kontaktbereichen je parallel zu einer gleichen Richtung der Trägerfolie ausgerichtet sind, derart, dass die Kontaktbereiche einer der Reihen je quer zu der Richtung den Kontaktbereichen der anderen der Reihen gegenüberliegen, wobei die zwei weiteren Kontaktbereiche sich je in der Nähe der Kontaktbereiche befinden, die die Enden jeder der Reihen formen, wobei die Kontaktbereiche je parallel zu der Richtung eine Abmessung von mindestens 1,7 mm und quer zu dieser Richtung eine Abmessung von mindestens 2 mm haben, wobei die Kontaktbereiche der zwei parallelen Reihen die Bestimmungen der Norm ISO 7816 bezüglich der mit C1 bis C3 und C5 bis C7 in dieser Norm bezeichneten Bereiche berücksichtigen, **dadurch gekennzeichnet, dass** diese acht Kontaktbereiche gemeinsam an jeder der Seiten der Trägerfolie entlang verlaufen.

2. Modul nach Anspruch 1, **dadurch gekennzeichnet, dass** das Bauteil als Flip-Chip montiert ist, wobei die Trägerfolie auf der anderen Seite elektrisch leitende Spuren (207) aufweist, die je an die acht Kontaktbereiche durch die Trägerfolie hindurch angeschlossen sind und Anschlussbereiche (211) aufweisen, die den Anschlussklemmen des Bauteils gegenüberliegen, an denen sie befestigt sind.

3. Modul nach Anspruch 2, **dadurch gekennzeichnet, dass** die durch den elektrischen Anschluss gewährleistete mechanische Verbindung durch ein Zwischenmaterial (212) vervollständigt wird, das den Raum zwischen dieser Trägerfolie und der gegenüberliegenden Seite des Bauteils füllt.

4. Modul nach einem der Ansprüche 1 bis 3, **dadurch gekennzeichnet, dass** die Trägerfolie auf ihrer ersten Seite eine Verstärkungszone (Z) aufweist, die durch diese Folie der Gesamtheit des Bauteils gegenüberliegt.

5. Modul nach Anspruch 4, **dadurch gekennzeichnet, dass**, da die auf der ersten Seite der Trägerfolie angeordneten Kontaktbereiche innerhalb einer Metallschicht geformt sind, die Verstärkungszone die gleiche Dicke und die gleiche Zusammensetzung hat wie die Kontaktbereiche.

6. Modul nach Anspruch 4 oder Anspruch 5, **dadurch gekennzeichnet, dass** die Verstärkungszone aus einem Stück mit einem der weiteren Kontaktbereiche (C'4, C'8) besteht.

7. Modul nach Anspruch 4 oder Anspruch 5, **dadurch gekennzeichnet, dass** die Verstärkungszone aus einem Stück mit einem der Kontaktbereiche (C1, C2, C3, C5, C6, C7) einer der Reihen besteht.

8. Modul nach Anspruch 4 oder Anspruch 5, **dadurch gekennzeichnet, dass** die Verstärkungszone (Z) elektrisch gegenüber jedem der Kontaktbereiche isoliert ist.

9. Modul nach Anspruch 8, **dadurch gekennzeichnet, dass** die Verstärkungszone parallel zur Richtung der Trägerfolie eine größere Abmessung als diejenige der Kontaktbereiche hat, die sich in der Mitte der Reihen von Kontaktbereichen befinden.

10. Modul nach einem der Ansprüche 1 bis 9, **dadurch gekennzeichnet, dass** die zwei weiteren Kontaktbereiche (C'4, C'8) einer USB-Kommunikationsfunktion gewidmet sind.

11. Modul nach einem der Ansprüche 1 bis 10, **dadurch gekennzeichnet, dass** die Anschlussklemmen (210) des Bauteils, an die die acht Kontaktbereiche angeschlossen sind, in zwei parallelen Reihen von vier Anschlussklemmen verteilt sind.

12. Chipkarte, die ein Modul nach einem der Ansprüche 1 bis 11 aufweist, die einen Kartenkörper (104, 204) aufweist, in dem ein Hohlraum ausgespart ist, der einen tiefen Teil (204B) aufweist, der geeignet ist, das elektronische Bauteil aufzunehmen, der von einem Umfangsteil (204A) geringerer Tiefe als diejenige umgeben ist, auf der das Modul durch seinen Umfang befestigt ist.

13. Karte nach Anspruch 12, **dadurch gekennzeichnet, dass** die Einheit der acht Kontaktbereiche sich gegenüber diesem Umfangsteil befindet.

14. Karte nach Anspruch 12 oder Anspruch 13, deren Körper kleinere Abmessungen als diejenigen des Formats 3FF hat.

15. Kartenlesegerät, das gestaltet ist, um durch Kontaktbereiche an die Kontaktbereiche C1 bis C3, C5 bis C7 und mindestens einen der weiteren Kontaktbereiche (C'4, C'8) eines wie in einem der Ansprüche 1 bis 11 definierten Moduls angeschlossen zu werden, wobei die relativen Anordnungen der Kontaktzonen des Lesegeräts sich aus denjenigen der Kontaktzonen des Moduls durch Spiegelwirkung ergeben.

## Claims

1. Smart card microcircuit module comprising a carrier film (101, 201) of overall rectangular shape provided on a first face with eight contact pads suitable for being brought in contact with an external element and, on a second face, with an electronic component (105, 205) equipped with connecting terminals (210) to which the contact pads are connected through the carrier film, these eight contact pads being arranged in two parallel series of three contact pads C1, C2, C3 and C5, C6, C7 and between which two other contact pads (C'4, C'8) are situated, these series of contact pads each being aligned parallel to one and the same direction of the carrier film in such a way that the contact pads of one of the series are respectively opposite, transversely to said direction, to the contact pads of the other of the series, the other two contact pads being respectively positioned near the contact pads forming the ends of each of the series, the contact pads each having, parallel to said direction, a dimension of at least 1.7 mm and, transversely to this direction, a dimension of at least 2 mm, the contact pads of the two parallel series complying with the provisions of standard ISO 7816 as regards the pads denoted C1 to C3 and C5 to C7 in this standard, **characterized in that** these eight contact pads jointly border each of the sides of the carrier film.

2. Module according to claim 1, **characterized in that** the component is mounted by flip-chip assembly, the carrier film having, on said other face, electrically conducting tracks (207) respectively connected to the eight contact pads through the carrier film and having connecting pads (211) opposite the connecting terminals of the component to which they are fixed.

3. Module according to claim 2, **characterized in that** the mechanical bond provided by the electrical connection is supplemented with an interposed material (212) filling the space between this carrier film and the opposite face of the component.

4. Module according to any one of claims 1 to 3, **characterized in that** the carrier film comprises, on its first face, a reinforcing zone (Z) facing, through this film, the whole component.

5. Module according to claim 4, **characterized in that** the contact pads arranged on the first face of the carrier film are formed within a metallic layer, the reinforcing zone has the same thickness and the same composition as the contact pads.

6. Module according to claim 4 or claim 5, **characterized in that** the reinforcing zone is integral with one of said other contact pads (C'4, C'8).

7. Module according to claim 4 or claim 5, **characterized in that** the reinforcing zone is integral with one of the contact pads (C1, C2, C3, C5, C6, C7) of one of the series.

8. Module according to claim 4 or claim 5, **characterized in that** the reinforcing zone (Z) is electrically insulated with respect to each of the contact pads.

9. Module according to claim 8, **characterized in that** the reinforcing zone has, parallel to said direction of the carrier film, a dimension greater than that of the contact pads located in the middle of the series of contact pads.

10. Module according to any one of claims 1 to 9, **characterized in that** said other two contact pads (C'4, C'8) are dedicated to a USB communication function.

11. Module according to any one of claims 1 to 10, **characterized in that** the connecting terminals (210) of the component to which the eight contact pads are connected are distributed in two parallel series of four connecting terminals.

12. Smart card comprising a module according to any one of claims 1 to 11, comprising a card body (104, 204) in which a cavity is made that has a deep part (204B) suitable for receiving the electronic component, which is surrounded by a peripheral part (204A) of smaller depth to which the module is fixed by its periphery.

13. Card according to claim 12, **characterized in that** all eight contact pads are opposite this peripheral part.

14. Card according to claim 12 or claim 13, the body of which has dimensions smaller than those of the 3FF format.

15. Card reader configured for connecting, via contact pads, to the contact pads C1 to C3, C5 to C7 and to at least one of said other contact pads (C'4, C'8) of a module as defined by any one of claims 1 to 11, the relative arrangement of the contact zones of the reader being obtained from that of the contact zones of the module, by mirror symmetry.
